# EUROPÄISCHE PATENTSCHRIFT

(11) **EP 3 388 803 B1**
(45) Veröffentlichungstag und Bekanntmachung des Hinweises auf die Patenterteilung: **01.07.2020**
(21) Anmeldenummer: 18165981.4
(22) Anmeldetag: 05.04.2018
(51) Int. Cl.: G01K 7/00, G01K 7/16, G01K 7/34, G01K 7/36, H02K 11/25

(54) **VERFAHREN ZUR ERFASSUNG DER WICKLUNGSTEMPERATUR EINER MOTORWICKLUNG**
METHOD FOR DETERMINATION OF THE TEMPERATURE OF THE WINDINGS IN A MOTOR WINDING
PROCÉDÉ DE DÉTECTION DE LA TEMPÉRATURE D'ENROULEMENT D'UN ENROULEMENT DE MOTEUR

(30) Priorität: 13.04.2017 DE 102017108112
(43) Veröffentlichungstag der Anmeldung: 17.10.2018
(73) Patentinhaber: ebm-papst Mulfingen GmbH & Co. KG, 74673 Mulfingen (DE)
(72) Erfinder: WYSTUP, Ralph, 74653 Künzelsau (DE); SCHROTH, Sebastian, 74635 Kupferzell (DE)
(74) Vertreter: Staeger & Sperling Partnerschaftsgesellschaft mbB

(56) Entgegenhaltungen:
- EP-A2- 0 284 711
- DE-A1-102008 000 784
- DE-C1- 19 754 351
- FR-A1- 3 036 184

## Beschreibung

Die Erfindung betrifft ein Verfahren zur Erfassung der Wicklungstemperatur einer Motorwicklung.

Es ist allgemein bekannt, dass beim Betrieb eines Elektromotors, wie z. B. einem Gleichstrommotor im Wesentlichen die Motorwicklung erwärmt wird und deshalb bei Vollastbetrieb oder unter extremen Einsatzbedingungen die Erwärmung der Wicklung besonders beachtet werden muss. Zu diesem Zweck sind verschiedene Temperaturmesseinrichtungen bekannt geworden.

Aus den Druckschriften FR 3 036 184 A, DE 197 54 351C1, EP 0 284 711 A2 und der DE 10 2008 000784 A1 sind Verfahren zur Bestimmung der Wicklungstemperatur einer Motorwicklung bekannt.

Eine Möglichkeit zur Bestimmung der Wicklungstemperatur besteht beispielsweise darin, einen Temperaturmessfühler in der Wicklung vorzusehen und damit die Temperatur der Wicklung direkt zu messen. Nachteilig bei dieser Einrichtung ist jedoch, dass die Temperatur nur an der Stelle gemessen werden kann, an der sich der Messfühler befindet. Dies bedeutet, dass örtliche Temperaturüberhöhungen in anderen Bereichen der Wicklung, oder die (gesamte) mittlere Temperatur (Temperaturverteilung) in der Wicklung, nicht gemessen werden können.

Eine weitere Möglichkeit zur Messung der Wicklungstemperatur besteht darin, den ohm'schen Widerstand der Wicklung zu messen und aus diesem gemessenen Widerstandswert und einem Vergleichswert, d. h. einem Widerstandswert der Wicklung bei kaltem Motor, die Temperaturerhöhung zu bestimmen. Dieses Verfahren lässt sich jedoch nur bei stillstehendem Motor anwenden und ist somit zur Überwachung der Motortemperatur während des Betriebs des Motors ungeeignet.

Bekannte Methoden zur Temperaturerfassung sind der Einbau von Sensoren in die Wicklung, die Bestimmung der Wicklungstemperatur über Zustandsschätzer (Kalmanfilter, Gradientenmethode) aus den Motor-Differentialgleichungen, die direkte Messung des Wicklungswiderstandes im Betrieb durch Einkoppelung einer Messspannung oder die Berechnung der Motortemperatur anhand thermischer Netzwerkmodelle des Motors.

Der Erfindung liegt die Aufgabe zugrunde, ein Messverfahren vorzusehen, welches auf einfache und zuverlässige Weise die Wicklungstemperatur bei einem Motor erfassen kann.

Diese Aufgabe wird mit einem Verfahren gemäß den Merkmalen von Anspruch 1 gelöst.

Die Erfindung macht sich die Erkenntnis zu Nutze, dass eine Motorwicklung als hochfrequent erregbarer LCR-Schwingkreis aus einer Spule L, einer Kapazität C und einem Wicklungswiderstand R angenommen bzw. betrachtet werden kann. Ein elektrischer Schwingkreis ist eine resonanzfähige elektrische Schaltung aus einer Spule und einem Kondensator, die elektrische Schwingungen ausführen kann. Bei einem solchen Schwingkreis wird Energie zwischen dem magnetischen Feld der Spule und dem elektrischen Feld des Kondensators periodisch ausgetauscht, wodurch abwechselnd hohe Stromstärke oder hohe Spannung im Kreis vorliegen. Die Resonanzfrequenz, mit der sich dieser Energiewechsel im ungestörten Fall periodisch wiederholt, ist signifikant abhängig von der Induktivität und der Kapazität der Motorwicklung.

Wird eine Motorwicklung durch einen Schaltvorgang oder einen Spannungsimpuls einmalig angestoßen, dann führt diese freie Schwingungen (Eigenschwingungen) aus, die in der Realität aber aufgrund von Leitungsverlusten (z. B. Wicklungswiderstand R) nach einer gewissen Zeit abklingen.

Die Resonanzfrequenz eines solchen Schwingkreises einer Motorwicklung ist über einen bestimmten Frequenzbereich ferner nahezu linear von der Temperatur abhängig.

Die Temperaturabhängigkeit der Motorwicklung wird stark bzw. hauptsächlich von dem temperaturabhängigen Verhalten des Isolationsmaterials der Drähte der Wicklung, also der Temperaturabhänigkeit des Dielektrikums der Motorwicklung bestimmt. Über eine Erfassung der Resonanzfrequenz der Motorwicklung kann somit auf die Temperatur der Wicklung geschlossen werden.

Erfindungsgemäß wird demnach ein Messverfahren zur Bestimmung der Wicklungstemperatur einer Motorwicklung eines Elektromotors, mit den folgenden Schritten vorgeschlagen:
a. Anregen der zu überwachenden Motorwicklung mittels Schwingungsanregung (mittels einer Spannungsanregung mit einer PWM-Spannung erzeugt von der Motorsteuerung), um diese in Resonanzschwingung zu versetzen;
b. Erfassen der sich dabei einstellenden Resonanzfrequenz f_{R} der Motorwicklung und
c. Bestimmen der Wicklungstemperatur (T_{W}) aus der erfassten Resonanzfrequenz (f_{R}), wobei zur Bestimmung der Wicklungstemperatur die Motorwicklung (3) als LCR-Schwingkreis betrachtet wird mit einer Induktivität (L), einer Kapazität (C) und einem Wicklungswiderstand (R) und zur Bestimmung der Wicklungstemperatur (T_{W}) die Sprungantwort des angeregten Schwingkreises ausgewertet wird.

Außerhalb des Rahmens der Erfindung ist es auch möglich, dass die Anregung im zuvor genannten Schritt a) durch Einprägen einer hochfrequenten Spannung auf die Motorspannung der Motorwicklung erfolgt. Somit wird sozusagen der Spannung an der Motorwicklung ein hochfrequentes Spannungsripel aufgesetzt und die sich daraus einstellende Resonanzfrequenz erfasst.

In der erfindungsgemäßen Ausgestaltung ist vorgesehen, dass zur Anregung der Motorwicklung die ohnehin vorhandene PWM-Spannung verwendet wird.

Hierzu wird mit besonderem Vorteil eine zum Betrieb des Motors von der Motorsteuerung erzeugte PWM-Spannung genutzt und daraus die Sprungantwort des Resonanzkreises ausgewertet.

Hierbei macht man sich zu Nutze, dass zur Bestimmung der Wicklungstemperatur die Motorwicklung, wie zuvor angegeben, als LCR-Schwingkreis betrachtet wird und zur Bestimmung der Wicklungstemperatur die Sprungantwort des angeregten Schwingkreises ausgewertet wird, ohne dass es hierfür besonderer zusätzlicher Bauteile, wie einem Sensor oder einem Temperaturfühler bedarf.

Weiter vorteilhaft ist es, wenn in einem Speicher, vorzugsweise einem Speicher des Motors Wertepaare (Resonanzfrequenz; Temperatur) hinterlegt sind, welche den Zusammenhang zwischen der Resonanzfrequenz und der jeweiligen Wicklungstemperatur der Motorwicklung für den zu überwachenden Motor repräsentieren und die aktuelle Wicklungstemperatur aus dem entsprechenden Wert aus dem Wertepaar der erfassten Resonanzfrequenz und dem dazu abgespeicherten Wert für die Wicklungstemperatur erhalten wird oder aus dem Polynom.

In einer weiteren vorteilhaften Ausgestaltung der Erfindung ist vorgesehen, dass als Resonanzfrequenz der angeregten Motorwicklung deren Parallelresonanzfrequenz ermittelt wird. Zur Messung der Parallelresonanzfrequenz können herkömmliche bekannte Messverfahren bzw. Messschaltungen verwendet werden.

Es ist weiter von Vorteil, wenn zur Verbesserung der Genauigkeit der Ergebnisse neben der Resonanzfrequenz auch die Impedanz der Motorwicklung erfasst wird und bei der Ermittlung der Wicklungstemperatur der Motorwicklung bei der Auswertung verwendet bzw. berücksichtigt wird.

Bei der außerhalb des Rahmens der Erfindung liegenden Möglichkeit, dass die Anregung durch Einprägen einer hochfrequenten Spannung auf die Motorspannung der Motorwicklung erfolgt, sollte diese Anregung in einem Frequenzbereich zwischen 1,5 × 10⁴ und 3 × 10⁴ HZ iegen Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Anordnung eines Motors mit einer Messvorrichtung zur Bestimmung der Wicklungstemperatur;
- Fig. 2: ein exemplarisches Diagramm mit Werten, welches den Zusammenhang des Kapazitätsverlaufs gegenüber der Wicklungstemperatur zeigt;
- Fig. 3: ein exemplarisches Diagramm mit Werten, welches den Zusammenhang der Induktivität gegenüber der Wicklungstemperatur zeigt;
- Fig. 4: ein exemplarisches Diagramm mit Werten, welches den Zusammenhang des Widerstands der Motorwicklung gegenüber der Wicklungstemperatur zeigt und
- Fig. 5: eine Kurve mit dem Zusammenhang zwischen der Parallelresonanzfrequenz bzw. der Impedanz und der Temperaturabhängigkeit der Motorwicklung.

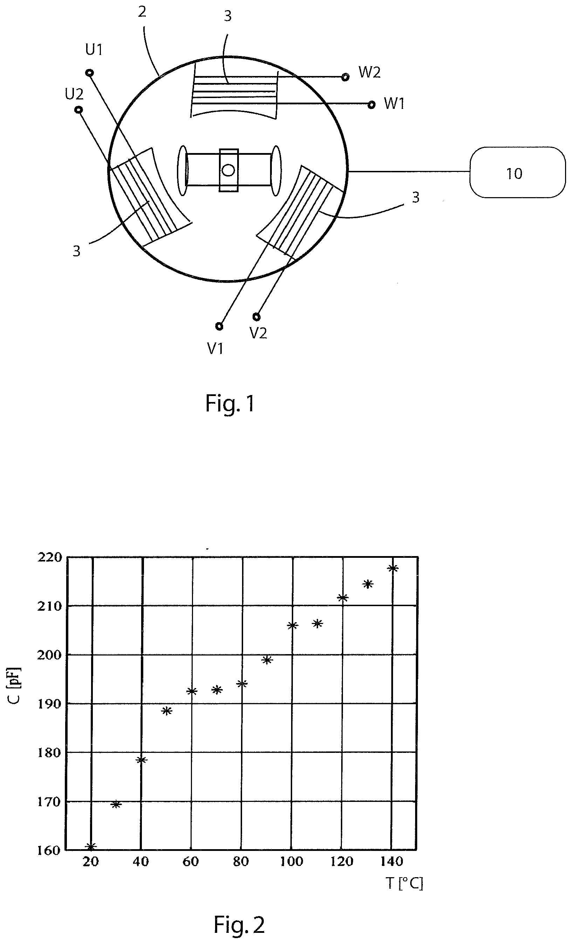

Im Folgenden wird die Erfindung mit Bezug auf die Figuren 1 bis 5 näher erläutert.

In der Fig. 1 ist eine lediglich schematische Anordnung eines Elektromotors 2 mit einer Messvorrichtung 10 zur Bestimmung der Wicklungstemperatur T_{w} einer Motorwicklung 3 des Elektromotors 2 gezeigt. Die Motorwicklungen 3 verfügen über die Anschlüsse (U1, U2, V1, V2, W1, W2).

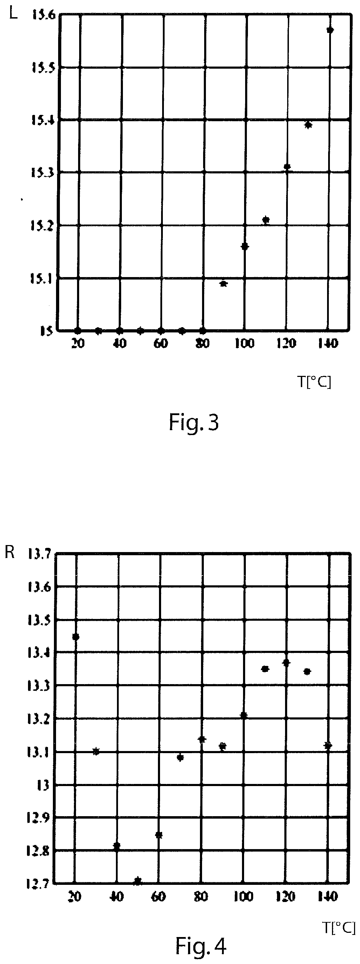

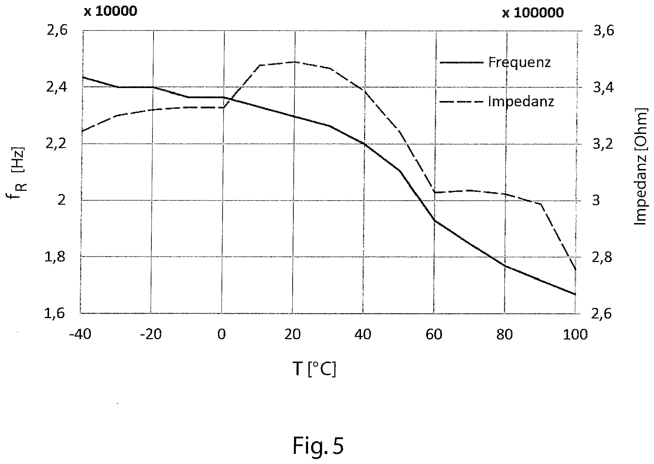

Wie zuvor erwähnt, verhält sich die Motorwicklung 3 wie ein LCR-Schwingkreis. In den Figuren 2 bis 4 ist jeweils ein exemplarisches Diagramm mit Werten gezeigt, welche den Zusammenhang der Kapazität C (Figur 2), den Zusammenhang der Induktivität L (Figur 3) und den Zusammenhang des Widerstands R der Motorwicklung 3 gegenüber der Wicklungstemperatur T_{W} zeigen. Diese Verläufe lassen sich aus Fig. 5 ermitteln, wenn ein RLC-Schwingkreis als Model benutzt wird.

Zum Erhalt der Kurve in der Figur 5 wird zunächst zur Auswertung eine Spannungsanregung der Motorwicklung 3 mittels hochfrequenter Schwingungsanregung vorgenommen. Diese liegt in dem vorliegenden Beispiel zwischen 1,6 x 10⁴ und 2,6 x 10⁴ HZ. In diesem Bereich stellt sich auch die Resonanzfrequenz f_{R} ein. Durch das Erfassen der sich dabei einstellenden Resonanzfrequenz f_{R} der Motorwicklung 3 lässt sich die Wicklungstemperatur T_{W} bestimmen. Sobald die Resonanzfrequenz f_{R} bei einer Motorwicklung 3 im Betrieb gemessen wird, lässt sich aus den Wertepaaren aus der Figur 5 aus der Messkurve mit durchgestrichener Linie (mit Frequenz bezeichnet) die entsprechende Wicklungstemperatur T_{W} bestimmen.

## Patentansprüche

1. Messverfahren zur Bestimmung der Wicklungstemperatur (T_{W}) einer Motorwicklung (3) eines Elektromotors (2) aufweisend eine Motorsteuerung, mit den folgenden Schritten:
a. Anregen der Motorwicklung (3) mittels einer Schwingungsanregung, um diese in Resonanzschwingung zu versetzen, wobei zur Anregung der Motorwicklung (3) dieser eine von der Motorsteuerung erzeugte PWM-Spannung eingeprägt wird;
b. Erfassen der sich dabei einstellenden Resonanzfrequenz (f_{R}) der Motorwicklung (3) und
c. Bestimmen der Wicklungstemperatur (T_{W}) aus der erfassten Resonanzfrequenz (f_{R}), wobei zur Bestimmung der Wicklungstemperatur die Motorwicklung (3) als LCR-Schwingkreis betrachtet wird mit einer Induktivität (L), einer Kapazität (C) und einem Wicklungswiderstand (R) und zur Bestimmung der Wicklungstemperatur (T_{W}) die Sprungantwort des angeregten Schwingkreises ausgewertet wird.

2. Messverfahren nach einem der vorhergehenden Ansprüche, wobei in einem Speicher Wertepaare (f_{R}, T_{W} hinterlegt sind, welche den Zusammenhang zwischen der Resonanzfrequenz (f_{R}) und der jeweiligen Wicklungstemperatur (T_{W}) der Motorwicklung (3) repräsentieren und die aktuelle Wicklungstemperatur (T_{W}) aus dem entsprechenden Wert aus dem Wertepaar (f_{R}, T_{W}) der erfassten Resonanzfrequenz (f_{R}) und dem dazu abgespeicherten Wert für die Wicklungstemperatur (T_{W}) erhalten wird.

3. Messverfahren nach einem der vorhergehenden Ansprüche, **dadurch gekennzeichnet, dass** als Resonanzfrequenz (f_{R}) der angeregten Motorwicklung (3) deren Parallelresonanzfrequenz ermittelt wird.

4. Messverfahren nach einem der vorhergehenden Ansprüche, **dadurch gekennzeichnet, dass** neben der Resonanzfrequenz (f_{R}) auch die Impedanz der Motorwicklung (3) erfasst wird und bei der Ermittlung der Wicklungstemperatur (T_{W}) der Motorwicklung (3) verwendet wird.

## Claims

1. A measuring method for the determination of the winding temperature (Tw) of a motor winding (3) of an electric motor (2) comprising a motor controller, having the following steps:
a. exciting the motor winding (3) by means of an oscillation excitation to set it into resonance oscillation, wherein, to excite the motor winding (3), a PWM voltage generated by the motor controller is applied thereto;
b. detecting the resonance frequency (f_{R}) of the motor winding (3) resulting in this case,and
c. determining the winding temperature (Tw) from the detected resonance frequency (f_{R}), wherein, to determine the winding temperature, the motor winding (3) is viewed as an LCR oscillating circuit having an inductance (L), a capacitance (C), and a winding resistance (R) and the step response of the excited oscillating circuit is analyzed for the determination of the winding temperature (Tw).

2. The measuring method as claimed in one of the preceding claims, wherein value pairs (f_{R}, T_{W}) are stored in a memory, which pairs represent the relationship between the resonance frequency (f_{R}) and the respective winding temperature (Tw) of the motor winding (3) and the present winding temperature (Tw) is obtained from the corresponding value from the value pair (f_{R}, Tw) of the detected resonance frequency (f_{R}) and the value stored thereto for the winding temperature (Tw).

3. The measuring method as claimed in one of the preceding claims, **characterized in that** the parallel resonance frequency of the excited motor winding (3) is ascertained as the resonance frequency (f_{R}) thereof.

4. The measuring method as claimed in one of the preceding claims, **characterized in that**, in addition to the resonance frequency (f_{R}), the impedance of the motor winding (3) is also acquired and used in the ascertainment of the winding temperature (Tw) of the motor winding (3).

## Revendications

1. Procédé de mesure pour la détermination de la température d'enroulement (Tw) d'un enroulement de moteur (3) d'un moteur électrique (2) présentant une commande de moteur, avec les étapes suivantes :
a. excitation de l'enroulement de moteur (3) au moyen d'une excitation d'oscillation afin de l'amener en oscillation de résonance, dans lequel pour l'excitation de l'enroulement de moteur (3), une tension PWM produite par la commande de moteur lui est appliquée ;
b. détection de la fréquence de résonance (f_{R}) se réglant ce faisant de l'enroulement de moteur (3) et
c. détermination de la température d'enroulement (Tw) à partir de la fréquence de résonnance (f_{R}) détectée, dans lequel pour la détermination de la température d'enroulement, l'enroulement de moteur (3) est considéré comme circuit oscillant LCR avec une inductance (L), une capacité (C) et une résistance d'enroulement (R) et pour la détermination de la température d'enroulement (Tw), la réponse indicielle du circuit oscillant excité est évaluée.

2. Procédé de mesure selon l'une quelconque des revendications précédentes, dans lequel des paires de valeurs (f_{R}, Tw) sont enregistrées dans une mémoire, lesquelles représentent la relation entre la fréquence de résonnance (f_{R}) et la température d'enroulement (Tw) respective de l'enroulement de moteur (3) et la température d'enroulement (Tw) actuelle est obtenue à partir de la valeur correspondante de la paire de valeurs (f_{R}, T_{W}) de la fréquence de résonnance (f_{R}) détectée et de la valeur enregistrée à cet effet pour la température d'enroulement (T_{W}),

3. Procédé de mesure selon l'une quelconque des revendications précédentes, **caractérisé en ce qu'**en tant que fréquence de résonnance (f_{R}) de l'enroulement de moteur (3) excité sa fréquence de résonnance parallèle est déterminée.

4. Procédé de mesure selon l'une quelconque des revendications précédentes, **caractérisé en ce qu'**en plus de la fréquence de résonnance (fR), l'impédance de l'enroulement de moteur (3) est détectée et est utilisée lors de la détermination de la température d'enroulement (Tw) de l'enroulement de moteur (3).
